# FASCICULE DE BREVET EUROPEEN

(11) **EP 1 640 249 B1**
(45) Date de publication et mention de la délivrance du brevet: **16.05.2007**
(21) Numéro de dépôt: 05291648.3
(22) Date de dépôt: 02.08.2005
(51) Int. Cl.: B62D 17/00, B60G 7/00

(54) **Véhicule automobile muni d'un essieu à traverse déformable et à porte fusée de roue mobile longitudinalement**
Kraftfahrzeug mit einer Verbundlenkerachse mit einem in Längsrichtung beweglichen Achsschenkel
Motor vehicle with a twist beam axle with a longitudinally movable stub axle

(30) Priorité: 28.09.2004 FR 0410259
(43) Date de publication de la demande: 29.03.2006
(73) Titulaire: Peugeot Citroen Automobiles SA, 78140 Vélizy-Villacoublay (FR)
(72) Inventeur: Lemasson, Damien, 92370 Chaville (FR); De Meira, Eric, 78280 Guyancourt (FR)
(74) Mandataire: Berger, Helmut

(56) Documents cités:
- DE-A1- 3 912 924
- US-A1- 2003 038 441
- US-B1- 6 485 223

## Description

L'invention concerne en général les véhicules automobiles et notamment les liaisons au sol de ces véhicules.

Plus précisément, l'invention concerne un véhicule automobile comprenant une caisse, au moins deux roues reposant sur le sol, et un essieu liant la caisse aux roues, cet essieu comprenant lui-même pour chaque roue un porte fusée de roue sur lequel ladite roue est montée à rotation autour d'un axe transversal, un bras sensiblement longitudinal lié à la caisse par une première extrémité, et des moyens de liaison du porte fusée à une seconde extrémité du bras opposée à la première, l'essieu comprenant encore une traverse déformable sensiblement transversale solidaire des bras respectifs des deux roues.

Des véhicules de ce type sont connus de l'art antérieur, voir par exemple US 2003/0038441, et comportent des portes fusées solidaires des bras longitudinaux.

Quand la roue rencontre un obstacle sur le sol, cette roue subit un effort ayant une composante verticale et une composante longitudinale.

Cet obstacle peut être une irrégularité du sol, une pierre, un trou ou tout autre objet ou formation en saillie ou en creux par rapport au sol.

La composante verticale est amortie par la suspension du véhicule avant d'être transmise à la caisse et n'est pas ressentie très brusquement par les passagers. La composante longitudinale n'est en revanche pas amortie par la suspension et est ressentie comme un choc par les passagers du véhicule.

Il est connu de prévoir que l'essieu permet un déplacement longitudinal du centre de roue lorsque cette roue rencontre un obstacle, de façon à effacer celui-ci et à améliorer les sensations des passagers.

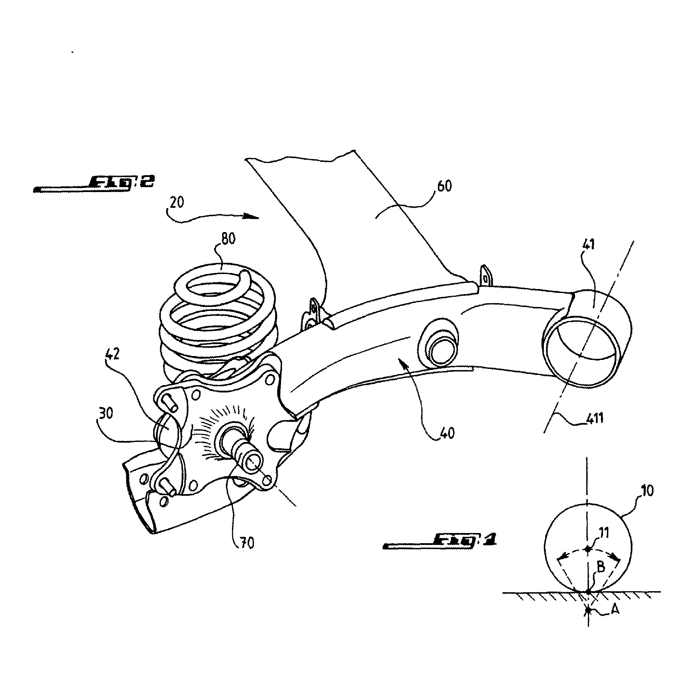

Dans ce but, on choisit un essieu dont la cinématique impose au centre de roue, en cas d'obstacle, un mouvement de rotation autour d'un axe transversal situé immédiatement sous la base de la roue, c'est-à-dire sous le point de contact entre la roue et le sol, comme le montre la figure 1.

Comme le bras de levier entre l'axe de rotation et le centre de roue est plus important que celui entre l'axe de rotation et la base de la roue, l'essieu peut présenter une raideur relativement plus faible au centre de la roue et relativement plus forte à la base de la roue.

Dans ce contexte, la présente invention a pour but de proposer une nouvelle solution pour guider le déplacement longitudinal du centre roue en cas d'obstacle et pour amortir la composante longitudinale de l'effort résultant du franchissement de cet obstacle par la roue.

A cette fin, le véhicule de l'invention, par ailleurs conforme à la définition générique qu'en donne le préambule ci-dessus, est essentiellement caractérisé en ce que les moyens de liaison comprennent des moyens de guidage du porte fusée en déplacement sur une trajectoire courbe longitudinale, et des moyens élastiques interposés entre le porte fusée et le bras rappelant le porte fusée vers une position de repos quand celui-ci se déplace le long de ladite trajectoire courbe.

Ladite trajectoire est avantageusement un arc de cercle centré sur un point proche du point de contact de la roue avec le sol.

Le véhicule peut également comprendre une ou plusieurs des caractéristiques ci-dessous.
- Les moyens de guidage peuvent comprendre au moins un trou oblong ménagé sur l'un du porte fusée ou du bras, et un organe de guidage solidaire de l'autre du porte fusée ou du bras et engagé libre en coulissement dans le trou oblong.
- Les moyens élastiques peuvent être constitués de cales élastiques.
- Les cales élastiques peuvent être constitués de polyuréthane.
- L'essieu peut comprendre pour chaque roue une fusée de roue transversale solidaire du porte fusée et supportant la roue, cette fusée présentant une extrémité intérieure engagée dans un logement du bras fermé par des premier et second fonds respectivement de premier et second côtés longitudinaux mutuellement opposés, les cales élastiques étant interposées longitudinalement entre l'extrémité intérieure de la fusée de roue et les premier et second fonds.
- Les moyens de guidage peuvent comprendre quatre trous oblongs et quatre organes de guidage correspondants occupant les angles d'un quadrilatère sensiblement perpendiculaire à la fusée de roue et traversé par ladite fusée.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une représentation schématique du mouvement du centre de roue quand celle-ci rencontre un obstacle sur la route,
- la figure 2 est une vue partielle en perspective de l'essieu d'un véhicule selon l'art antérieur,
- la figure 3 est une vue partielle en perspective de l'essieu d'un véhicule selon l'invention,
- la figure 4 est une vue éclatée en perspective du porte fusée de roue, du bras longitudinal, et de leurs moyens de liaison,
- les figures 5A à 5C sont des vues en perspective montrant la configuration des éléments de la figure 4 respectivement après pivotement du porte fusée d'un premier côté longitudinal, au repos, et après rotation du porte fusée d'un second côté longitudinal opposé au premier, avec un arrachement pour laisser apparaître les cales élastiques,
- la figure 6 est une vue transversale de côté, suivant la flèche VI de la figure 3, et
- la figure 7 est une vue agrandie d'un détail VII de la figure 6.

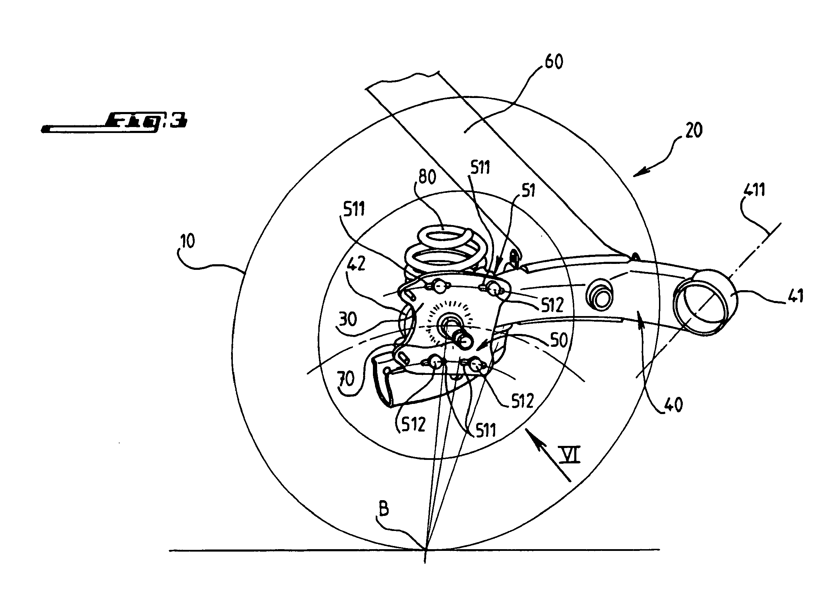

Le véhicule automobile dont l'essieu est représenté sur la figure 2 comprend une caisse (non représentée), quatre roues 10 reposant sur le sol, et au moins un essieu 20 liant la caisse aux deux roues avant ou aux deux roues arrière.

Cet essieu 20 comprend pour chaque roue 10 un porte fusée de roue 30 supportant une fusée 70 sur laquelle ladite roue 10 est montée à rotation autour d'un axe transversal, un bras 40 sensiblement longitudinal lié à la caisse par une première extrémité 41, et des moyens 50 de liaison du porte fusée 30 à une seconde extrémité 42 du bras 40 opposée à la première, l'essieu 20 comprenant encore une traverse déformable 60 sensiblement transversale solidaire des bras 40 respectifs des deux roues 10.

La fusée 70 s'étend transversalement et est solidaire du porte fusée 30.

La traverse 60 est réalisée en tôles embouties, et est rigidement liée par ses deux extrémités opposées à des parties centrales des deux bras longitudinaux 40.

Chaque bras longitudinal 60 est articulé sur la caisse autour d'un axe 411 sensiblement transversal ou légèrement incliné par rapport à la direction transversale, et présente à cet effet une première extrémité 41 conformée en un anneau entourant l'axe transversal 411, une cale élastique cylindrique étant interposée entre ledit anneau et l'axe.

On voit sur la figure 2 que le véhicule comprend en outre une suspension munie d'un ressort en spirale 80 et d'un amortisseur (non représenté) interposés verticalement entre la seconde extrémité 42 du bras 40 et la caisse.

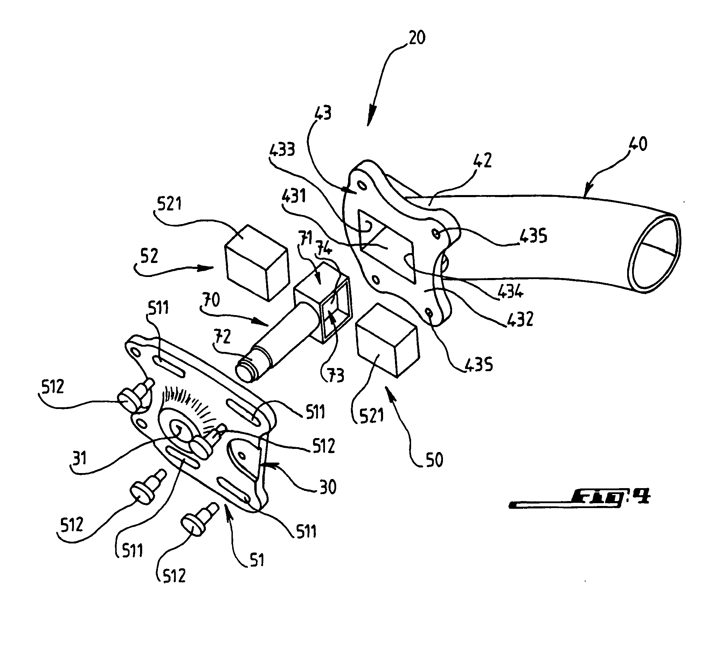

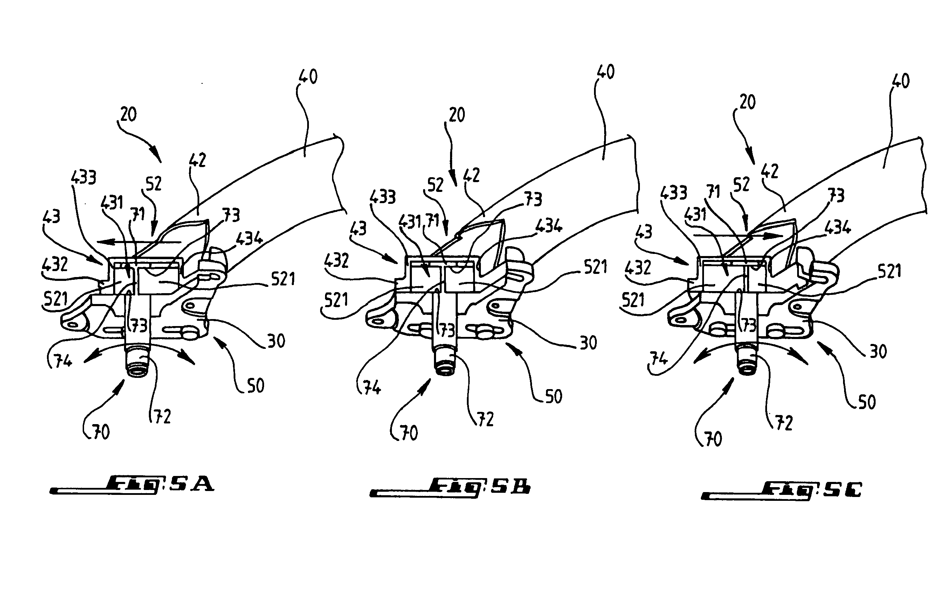

Selon l'invention, les moyens de liaison 50, visibles sur la figure 4, entre le porte fusée 30 et le bras 40 comprennent des moyens 51 de guidage du porte fusée 30 en déplacement en rotation sur une trajectoire courbe longitudinale, et des moyens élastiques 52 interposés entre le porte fusée 30 et le bras 40 rappelant le porte fusée 30 vers une position de repos quand celui-ci se déplace le long de ladite trajectoire courbe.

Comme le montre la figure 3, ladite trajectoire est un arc de cercle centré sur un point A proche du point de contact B de la roue 10 avec le sol.

On voit sur la figure 4 que le porte fusée 40 est une plaque métallique plane, sensiblement perpendiculaire à la direction transversale, présentant une forme générale rectangulaire.

Le bras 40 comprend à sa seconde extrémité 42 une pièce en caisson 43 définissant un logement parallélépipédique 431 présentant une face extérieure ouverte. Ladite face s'étend perpendiculairement à la direction transversale, et est entourée d'une collerette 432 présentant une surface extérieure plane, perpendiculaire à la direction transversale, sur laquelle est plaquée le porte fusée de roue 30.

Le logement 431 est fermé de tous les autres côtés, et présente des premier et second fonds 433/434 mutuellement parallèles des deux côtés longitudinaux opposés.

On voit encore sur la figure 4 que les moyens de guidage 51 comprennent quatre trous oblongs 511 ménagés sur le porte fusée 30, et quatre organes de guidage 512 solidaires de la pièce en caisson 43 et engagés libres en coulissement chacun dans un trou oblong 511.

Les quatre trous oblongs 511 sont disposés proches des quatre angles de la plaque porte fusée 30 et occupent donc les angles d'un quadrilatère. Deux des trous oblongs sont disposés le long d'un bord supérieur du porte fusée 30, dans le prolongement longitudinal l'un de l'autre, et s'inscrivent sur un même premier cercle centré sur le point A. Deux autres des trous oblongs sont disposés le long d'un bord inférieur du porte fusée 30, dans le prolongement l'un de l'autre, et s'inscrivent sur un même second cercle, centré sur le point A, de rayon plus faible que le premier cercle.

Les organes de guidages 512 sont par exemple des vis épaulées, comprenant chacune une tête, et une tige s'étendant à partir de la tête à travers les trous 511 jusqu'à un orifice fileté 435 ménagé dans la collerette 432 de la pièce en caisson 43. La tige présente une extrémité libre filetée opposée à la tête, vissée dans l'orifice 435 correspondant. Le diamètre de la tête de la vis 512 est supérieur à la largeur du trou oblong 511 correspondant.

Comme on le voit sur la figure 4, la fusée 70 traverse la plaque porte fusée 30 par un orifice de passage 31, et présente une extrémité intérieure 71 disposée à l'intérieur du logement 431 et une extrémité extérieure 432 opposée à l'extrémité intérieure en saillie vers l'extérieur du véhicule par rapport au porte fusée 30.

La roue 10 est montée sur l'extrémité extérieure 72, qui présente une section ronde.

Les moyens élastiques 52 sont constitués de cales élastiques 521 interposées longitudinalement entre l'extrémité intérieure 71 de la fusée de roue 70 et les premier et second fonds 433 et 434 du logement 431.

La ou les cales élastiques sont constituées chacune d'un bloc parallélépipédique de matériau élastique. Pour des raisons d'intégration, de filtration des vibrations et de gain de place, ces cales seront réalisées de préférence en un matériau dont le volume varie de façon non linéaire avec la contrainte exercée sur lui, et dans lequel il est possible de réaliser des cales de raideur et d'amortissement variant dans une large plage. On peut ainsi adapter facilement les caractéristiques de l'essieu au cahier des charges fixé à la conception du véhicule.

Les cales sont typiquement réalisées en polyuréthane, ou dans un matériau analogue.

L'extrémité intérieure 71 de la fusée constitue un caisson creux en parallélépipède rectangle, ouvert des deux côtés longitudinaux opposés, divisé en deux sièges 73 de réception des cales 521 par une cloison 74 transversale verticale médiane du caisson (voir figure 4).

Les deux cales 521 sont en appui d'un côté sur le premier ou le second fond 433 ou 434, et de l'autre sur la cloison centrale 74.

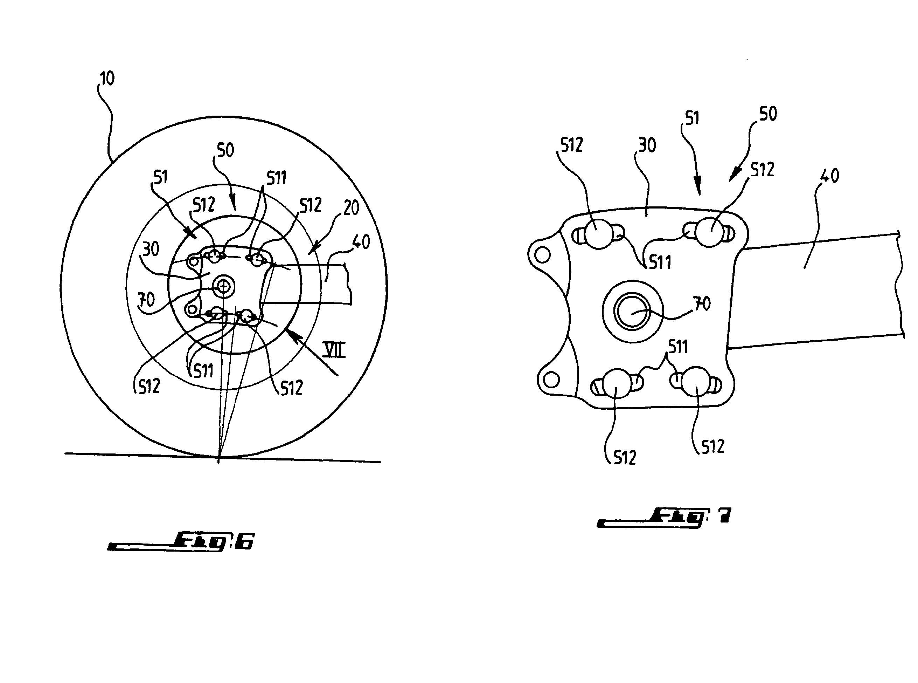

On voit sur la figure 5B que, au repos, les cales exercent sur la fusée des efforts de même valeur absolue, orientés en sens inverses, de telle sorte que la première extrémité 71 de la fusée 70 est positionnée longitudinalement au centre du logement 431.

On entend par repos la situation dans laquelle la roue 10 ne subit pas de sollicitation longitudinale.

Quand la roue 10 est sollicitée d'un premier côté longitudinal par un obstacle rencontré sur la route, la fusée 70 et le porte fusée 30 se déplacent conjointement de ce premier côté par rapport au bras 40, comme illustré sur la figure 5A. La cale élastique 521 situé de ce premier côté est comprimée entre la fusée de roue 70 et le premier fond 433, tandis que la cale 521 située de l'autre côté se détend. Parallèlement, les quatre trous oblongs 511 se déplacent du premier côté par rapport aux organes de guidage 512, de telle sorte que le porte fusée et la fusée subissent un déplacement en arc de cercle centré sur le point A.

La figure 5C illustre le cas où la roue 10 est sollicitée du second côté longitudinal par un obstacle rencontré sur la route. Le porte fusée 30 et la fusée 70 se déplacent alors de façon symétrique par rapport à la situation de la figure 5A, du second côté, suivant un arc de cercle centré sur le point A, en comprimant la cale 521 située de ce second côté et en détendant l'autre cale 521.

Le rapport entre l'effort exercé sur la roue et le déplacement du porte moyeu est fonction de l'élasticité de la cale.

En outre, le déplacement longitudinal du porte fusée 30 s'accompagne d'un amortissement de l'effort longitudinal exercé sur la roue.

On fait varier l'élasticité et la capacité d'amortissement en jouant sur la composition du matériau constituant la cale, et sur la géométrie de la cale.

On notera enfin que l'orifice 31 du porte fusée 30 recevant la fusée 70 est disposé à l'intérieur du quadrilatère dont les trous oblongs 511 occupent les sommets, de façon à assurer un bon guidage en rotation du centre de roue 11.

Le véhicule décrit ci-dessus peut présenter de multiples variantes sans sortir du cadre de l'invention.

Les trous oblongs 511 peuvent être portés par la collerette de la pièce en caisson et non par le porte moyeu. Dans ce cas les organes de guidage 512 sont solidaires du porte moyeu.

Les moyens de guidage 51 peuvent comporter moins ou plus de quatre trous oblongs. Un au moins est nécessaire pour guider le mouvement du porte fusée.

On comprend bien que le véhicule de l'invention présente des avantages significatifs.

Les moyens de liaison entre le porte moyeu et le bras permettent de contrôler le déplacement du centre de roue en fonction de l'effort appliqué sur la roue, et de guider le centre de roue le long d'une trajectoire en arc de cercle centré sur un point proche de la base de la roue.

Les cales élastiques permettent d'amortir la composante longitudinale de l'effort appliqué à la roue avant transmission à la caisse, ce qui améliore le confort des passagers.

Ces moyens de liaison sont simples mécaniquement et sont particulièrement compacts.

En jouant sur la composition du matériau constituant les cales et sur leur géométrie, on peut faire varier les caractéristiques d'élasticité et d'amortissement de l'essieu sur une large plage, ce qui permet de d'adapter facilement l'essieu au cahier des charges défini lors de la conception du véhicule.

## Revendications

1. Véhicule automobile comprenant une caisse, au moins deux roues (10) reposant sur le sol, et un essieu (20) liant la caisse aux roues (10), cet essieu (20) comprenant lui-même pour chaque roue (10) un porte fusée de roue (30) sur lequel ladite roue (10) est montée à rotation autour d'un axe transversal, un bras (40) sensiblement longitudinal lié à la caisse par une première extrémité (41), et des moyens de liaison (50) du porte fusée (30) à une seconde extrémité (42) du bras (40) opposée à la première, l'essieu (20) comprenant encore une traverse déformable (60) sensiblement transversale solidaire des bras (40) respectifs des deux roues (10), **caractérisé en ce que** les moyens de liaison (50) comprennent des moyens (51) de guidage du porte fusée (30) en déplacement sur une trajectoire courbe longitudinale, et des moyens élastiques (52) interposés entre le porte fusée (30) et le bras (40) rappelant le porte fusée (30) vers une position de repos quand celui-ci se déplace le long de ladite trajectoire courbe.

2. Véhicule selon la revendication 1, **caractérisé en ce que** ladite trajectoire est un arc de cercle centré sur un point proche du point de contact de la roue (10) avec le sol.

3. Véhicule selon la revendication 1 ou 2, **caractérisé en ce que** les moyens de guidage (51) comprennent au moins un trou oblong (511) ménagé sur l'un du porte fusée (30) ou du bras (40), et un organe de guidage (512) solidaire de l'autre du porte fusée (30) ou du bras (40) et engagé libre en coulissement dans le trou oblong (511).

4. Véhicule selon la revendication 3, **caractérisé en ce que** les moyens élastiques (52) sont constitués de cales élastiques (521).

5. Véhicule selon la revendication 4, **caractérisé en ce que** les cales élastiques (521) sont constitués de polyuréthane.

6. Véhicule selon la revendication 4 ou 5, **caractérisé en ce que** l'essieu (20) comprend pour chaque roue (10) une fusée de roue (70) transversale solidaire du porte fusée (30) et supportant la roue (10), cette fusée (70) présentant une extrémité intérieure (71) engagée dans un logement (431) du bras (40) fermé par des premier et second fonds (433, 434) respectivement de premier et second côtés longitudinaux mutuellement opposés, les cales élastiques (521) étant interposées longitudinalement entre l'extrémité intérieure (71) de la fusée de roue (70) et les premier et second fonds (433, 434).

7. Véhicule selon la revendication 6, **caractérisé en ce que** les moyens de guidage (51) comprennent quatre trous oblongs (511) et quatre organes de guidage (512) correspondants occupant les angles d'un quadrilatère sensiblement perpendiculaire à la fusée de roue (70) et traversé par ladite fusée.

## Claims

1. A motor vehicle comprising a body, at least two wheels (10) lying on the ground, and an axle (20) connecting the body to the wheels (10), this axle (20) itself comprising for each wheel (10) a stub axle (30) on which said wheel (10) is rotatably mounted around a transverse axis, a substantially longitudinal arm (40) connected to the body through a first end (41), and means (50) for connecting the stub axle (30) to a second end (42) of the arm (40) opposite to the first, the axle (20) further comprising a substantially transverse twist beam (60) integral with the respective arms (40) of both wheels (10), **characterized in that** the connecting means (50) comprise means (51) for guiding the moving stub axle (30) on a longitudinal curved trajectory, and elastic means (52) interposed between the stub axle (30) and the arm (40), pulling back the stub axle (30) towards a rest position when the latter moves along said curved trajectory.

2. The vehicle according to claim 1, **characterized in that** said trajectory is a circular arc centered on a point close to the point of contact of the wheel (10) with the ground.

3. The vehicle according to claim 1 or 2, **characterized in that** the guiding means (51) comprise at least one oblong hole (511) made on one of the stub axle (30) or of the arm (40), and a guiding member (512) integral with the other of the stub axle (30) or of the arm (40) and freely and slidably engaged in the oblong hole (511).

4. The vehicle according to claim 3, **characterized in that** the elastic means (52) consist of elastic shims (521).

5. The vehicle according to claim 4, **characterized in that** the elastic shims (521) consist of polyurethane.

6. The vehicle according to claim 4 or 5, **characterized in that** the axle (20) comprises for each wheel (10) a transverse wheel spindle (70) integral with the stub axle (30) and supporting the wheel (10), this spindle (70) having an interior end (71) engaged in a housing (431) of the arm (40) closed by first second bottoms (433, 434) of the first and second mutually opposite longitudinal sides, respectively, the elastic shims (521) being longitudinally interposed between the interior end (71) of the wheel spindle (70) and the first and second bottoms (433, 434).

7. The vehicle according to claim 6, **characterized in that** the guiding means (51) comprise four oblong holes (511) and four corresponding guiding members (512) occupying the angles of a quadrilateral substantially perpendicular to the wheel spindle (70) and crossed by said spindle.

## Patentansprüche

1. Kraftfahrzeug, umfassend eine Karosserie, mindestens zwei auf dem Boden ruhende Räder (10) und eine die Karosserie mit den Rädern (10) verbindende Achse (20), wobei diese Achse (20) selbst für jedes Rad (10) einen Achsschenkel (30) umfasst, auf dem das besagte Rad (10) in Rotation um eine transversale Achse montiert ist, einen etwa längs mit der Karosserie durch ein erstes Ende (41) verbundenen Arm (40), und Verbindungsmittel (50) des Achsschenkels (30) mit einem zweiten Ende (42) des Arms (40) gegenüber dem ersten, wobei die Achse (20) weiterhin einen etwa transversalen Verbundlenker (60) umfasst, der mit den jeweiligen Armen (40) der zwei Räder (10) verbunden ist, **dadurch gekennzeichnet, dass** die Verbindungsmittel (50) Mittel (51) zur Führung des Achsschenkels (30) über eine längliche Kurvenbahn umfassen, und elastische Mittel (52) zwischen dem Achsschenkel (30) und dem Arm (40), die den Achsschenkel (30) in eine Ruhestellung zurückrufen, wenn sich dieser entlang der besagten Kurvenbahn bewegt.

2. Fahrzeug nach Anspruch 1, **dadurch gekennzeichnet, dass** die besagte Bahn ein Kreisbogen ist, der auf einen Punkt in der Nähe des Kontaktpunkts des Rades (10) mit dem Boden zentriert ist.

3. Fahrzeug nach Anspruch 1 oder 2, **dadurch gekennzeichnet, dass** die Führungsmittel (51) mindestens ein Langloch (511) umfassen, dass auf einem der Achsschenkel (30) oder der Arme (40) eingearbeitet ist, und ein Führungsorgan (512), das mit dem anderen Achsschenkel (30) oder Arm (40) verbunden ist und frei gleitend in das Langloch (511) eingreift.

4. Fahrzeug nach Anspruch 3, **dadurch gekennzeichnet, dass** die elastischen Mittel (52) aus elastischen Keilen (521) bestehen.

5. Fahrzeug nach Anspruch 4, **dadurch gekennzeichnet, dass** die elastischen Keile (521) aus Polyurethan bestehen.

6. Fahrzeug nach Anspruch 4 oder 5, **dadurch gekennzeichnet, dass** die Achse (20) für jedes Rad (10) einen transversalen Radschenkel (70) umfasst, der mit dem Achsschenkel (30) verbunden ist und das Rad (10) hält, wobei dieser Schenkel (70) ein inneres Ende (71) aufweist, das in eine Aufnahme (431) des Arms (40) eingreift, die durch erste und zweite Böden (433, 434) jeweils erster und zweiter gegenüberliegender Längsseiten geschlossen ist, wobei sich die elastischen Keile (521) längs zwischen dem inneren Ende (71) des Radschenkels (70) und dem ersten und zweiten Boden (433, 434) befinden.

7. Fahrzeug nach Anspruch 6, **dadurch gekennzeichnet, dass** die Führungsmittel (51) vier Langlöcher (511) und vier entsprechende Führungsorgane (512) umfassen, die die Winkel eines Vierecks belegen, das etwa senkrecht zum Radschenkel (70) steht und von dem besagten Schenkel durchquert wird.
